# EUROPEAN PATENT SPECIFICATION

(11) **EP 4 070 937 B1**
(45) Date of publication and mention of the grant of the patent: **17.07.2024**
(21) Application number: 20895755.5
(22) Date of filing: 01.12.2020
(51) Int. Cl.: B29C 64/30, B29C 35/08, B33Y 10/00, B33Y 40/20, B29C 69/00

(54) **METHOD FOR PRODUCING FIBER-REINFORCED RESIN ARTICLE**
VERFAHREN ZUR HERSTELLUNG EINES FASERVERSTÄRKTEN HARZGEGENSTANDS
PROCÉDÉ DE PRODUCTION D'UN ARTICLE EN RÉSINE RENFORCÉ PAR DES FIBRES

(30) Priority: 03.12.2019 JP 2019218803
(43) Date of publication of application: 12.10.2022
(73) Proprietor: MITSUBISHI GAS CHEMICAL COMPANY, INC., Chiyoda-ku Tokyo 100-8324 (JP)
(72) Inventor: HIROOKA, Nobuki, Yokohama-shi Kanagawa 222-0033 (JP); ODAN, Yusuke, Yokohama-shi Kanagawa 222-0033 (JP); MISHIMA, Shogo, Yokohama-shi Kanagawa 222-0033 (JP); EGUCHI, Takeshi, Chofu-shi, Tokyo 182-0034 (JP)
(74) Representative: Vossius & Partner Patentanwälte Rechtsanwälte mbB
(86) International application number: PCT/JP2020/044734
(87) International publication number: WO 2021/112097

(56) References cited:
- EP-A1- 1 892 078
- CN-U- 208 697 972
- GB-A- 2 519 636
- JP-A- 2018 083 872
- JP-A- 2019 084 832
- JP-A- 2019 123 241
- JP-A- 2019 518 864
- US-A1- 2014 102 578
- US-A1- 2018 111 315
- US-B2- 10 300 632

## Description

### Technical Field

The present invention relates to a method for producing a fiber-reinforced resin article.

### Background Art

Composite materials (fiber-reinforced plastics (FRP): inorganic fiber-reinforced plastics (for example, carbon fiber-reinforced plastic (CFRP), glass fiber-reinforced plastic (GFRP), and other ceramic fiber-reinforced plastics, metal fiber-reinforced plastics), organic fiber-reinforced plastics (for example, aramid fiber-reinforced plastics and natural fiber-reinforced plastics (for example, cellulose fiber-reinforced plastics)) have been attracting attention. For example, in the aerospace and automotive industries, CFRP is particularly attracting attention, from the perspective of energy savings through weight reduction. Of course, CFRP is also attracting attention in fields besides the industries described above. Recently, attention is also directed to cellulose fiber-reinforced plastics.

Additive manufacturing technology (3D printing technology) is a known forming technology. This technology is described as follows in the "2013 Patent Application Technical Trend Survey (Summary), 3D Printers". 3D printing technology (additive manufacturing technology) refers to the process of making an article from a numerical representation of its three-dimensional shape, using material deposition. Often, this process is achieved by stacking a layer onto another layer. The representation of a 3D printer is used from a two-dimensional contrast output onto paper. In ASTM F2792-12a (Standard Terminology for Additive Manufacturing Technologies), the term additive manufacturing is used.

Thermoplastic resin laminated products made using additive manufacturing technology (3D printing technology) are becoming more and more popular, even for personal use, because this technology can make an object having a desired shape with a great degree of freedom. However, in these products, the resin itself has low mechanical properties. For this reason, products made using additive manufacturing technology have so far been limited to toys and the like.

For example, a 3D printer for CFRP has been proposed by MarkForged, Inc. As a fiber is added to materials, a previously known concept of free molding has been expanded to free fiber orientation. Therefore, even in the aerospace and automotive industries, efforts are underway to develop CFRP products through additive manufacturing technology. The development of CFRP products through additive manufacturing technologies is even being attempted in the mechanical component industry. JP 2018083872 discloses a method according to the preamble of claim 1.

### Citation List

### Patent Document

Patent Document 1: JP 2016-78205 A
Patent Document 2: JP 2016-172317 A
Patent Document 3: JP 6388238 B

### Disclosure of Invention

### Technical Problem

Known additive manufacturing technologies could not provide molded articles efficiently in a short time.

The problem to be solved by the present invention is to provide a fiber-reinforced resin article with excellent mechanical properties in a short time and with high efficiency.

### Solution to Problem

The present invention proposes a method for producing a fiber-reinforced resin article, according to claim 1.

According to an embodiment of the invention, heating before pressurizing is performed by induction heating.

According to a further embodiment of the invention, heating before pressurizing is performed by infrared irradiation.

According to an embodiment of the invention, heating before pressurizing is performed by laser irradiation.

According to an embodiment of the invention, heating before pressurizing is performed by microwave irradiation.

In an embodiment of the invention, the temperature at which the resin of the 3D printed article is softened is from (a softening temperature of the resin - 100 °C) to (a softening temperature of the resin + 300 °C).

In another embodiment not covered by the appended claims, the temperature at which the resin of the 3D printed article is softened is from 90 to 500°C.

In an embodiment of the invention, the fibers are conductive fibers in a case where the heating is performed by induction heating.

In a further embodiment of the invention, in a case where the heating is performed by infrared irradiation, the 3D printed article is a three-dimensional article having a part with a maximum thickness of 1.5 cm or less, and satisfies 1 ≤ {(thickness of a thickest portion)/(thickness of a thinnest portion)} ≤ 2.

In a further embodiment of the invention, in a case where the heating is performed by laser irradiation, the 3D printed article is a three-dimensional article having a part with a maximum thickness of 1.5 cm or more, and satisfies 2 ≤ {(thickness of a thickest portion)/(thickness of a thinnest portion)}.

In an embodiment of the invention, in a case where the heating is performed by microwave irradiation, the 3D printed article is a three-dimensional article with a protrusion.

In an embodiment of the invention, the resin is a thermoplastic resin.

In a further embodiment of the invention, the resin is a thermosetting resin.

In an embodiment not covered by the appended claims, the resin is one or more selected from the group consisting of thermoplastic and thermosetting resins.

The resin is, for example, one or more selected from the group consisting of polyamide resins, saturated polyester resins, unsaturated polyester resins, polyolefin resins, polystyrene resins, polyetherketone resins, polyethersulfone resins, polyetherimide resins, polyacetal resins, polycarbonate resins, acrylic resins, polyarylate resins, polyphenylene ether resins, polyimide resins, polyether nitrile resins, phenoxy resins, polyphenylene sulfide resins, polysulfone resins, polyketone resins, urethane resins, fluorinated resins, polybenzimidazole resins, epoxy resins, vinyl ester resins, diallyl phthalate resins, phenol resins, maleimide resins, cyanate resins, bismaleimide resins, benzoxazine resins, xylene resins, and dicyclopentadiene resins.

Aternatively, the resin is, for example, one or more selected from the group of cyanate resins and bismaleimide resins.

Alternatively, the resin is, for example, one or more selected from the group of polyamide resins.

The resin can be, for example, a polyamide resin including diamine-derived constituent units and dicarboxylic acid-derived constituent units, in which 50 mol% or more of the diamine-derived constituent units are derived from xylenediamine.

The fibers are preferably reinforcing fibers.

The fibers are preferably conductive fibers.

The fibers are preferably carbon fibers.

In an embodiment of the invention, the fibers include fibers with a fiber length of 3 cm or more.

The pressurizing preferably uses a servo press machine.

Alternatively, the pressurizing preferably uses a forming die.

According to the invention, the heating is performed before the pressurizing.

In an embodiment not covered by the appended claims heating is performed while at least a part of the 3D printed article is disposed in a forming die.

According to an embodiment of the present invention, the 3D printed article formed by the 3D printer is disposed in a cavity of a forming die, the 3D printed article is heated to a temperature at which the resin of the 3D printed article is softened in a manner such that the 3D printed article and the forming die are not in contact with a heating device, and the 3D printed article is pressurized in the cavity.

In an embodiment not covered by the appended claims, the pressurizing is performed under a condition of 0.01 MPa or more.

In an embodiment not covered by the appended claims, the 3D printing step includes, in a case where a fiber-reinforced plastic product is divided into two or more parts, forming parts separately, each of which corresponds to each of the divided parts, and the pressurizing includes combining the parts formed separately into one body and pressurizing the combined body. Depending on a configuration (and/or shape) of the fiber-reinforced plastic product (product A), it may be difficult to form it by a single (one) 3D printing step. For example, a product A may be a combination of parts A1, A2, ..., and An (where n is an integer of 2 or more). The part Ak (k = 1 to n) may be easily formed by a single 3D printing step. Such a case is conceivable of course. For example, the fibers in the part A1 are different from the fibers in the part Ak (k = 2 to n). Another example is when the resin is changed. Yet another example is when the shape of the product A is too complex to be formed (or difficult to be formed) in a single 3D printing step. In short, the method described above is effective when the finished product is a combination of several parts. That is, the part A1 is formed by a 3D printing step A1. The part A2 is formed by a 3D printing step A2. Similarly, a part An is formed by a 3D printing step An. The parts A1, A2, ..., An formed by the 3D printing steps A1, A2, ..., An are assembled to form the product A. For example, the parts A1, A2, ..., An are arranged in a predetermined forming die and assembled to form the shape of the product A. In this assembled state, pressurizing is performed. This pressurizing results in integration.

The method described above may further include a preforming step in which the product obtained in the 3D printing step is preformed before the pressurizing step.

The 3D printing step is preferably performed in such a manner that the fibers in the product obtained in the 3D printing step are dispersed in the resin.

The method can include preparing a 3D printed article formed by a 3D printer using the resin and fibers, and a forming die having a cavity.

In an embodiment of the invention, the method produces a fiber-reinforced resin article, and when a test specimen having a length of 100 mm, a width of 15 mm, and a thickness of 2 mm is taken from the fiber-reinforced resin article, the test specimen has a flexural strength of 1000 MPa or more and a flexural modulus of 80 GPa or more.

There is also disclosed a molded body formed by the method described above.

### Advantageous Effects of Invention

According to the present invention, a fiber-reinforced resin article with improved mechanical properties could be obtained efficiently and in a short time. For example, the method produced efficiently in a short time, the fiber-reinforced resin article, and when a test specimen having a length of 100 mm, a width of 15 mm, and a thickness of 2 mm was taken from the fiber-reinforced resin article, the test specimen had a flexural strength of 1000 MPa or more and a flexural modulus of 80 GPa or more.

The present invention can be easily implemented.

### Brief Description of Drawings

FIG. 1 is an illustration for Example 1.
FIG. 2 is an illustration for Example 2.
FIG. 3 is an illustration for Example 3.
FIG. 4 is an illustration for Example 4.
FIG. 5 is an X-ray CT image (cross-sectional view from the irradiated surface) showing the void configuration in the 3D printed article after pressurizing.
FIG. 6 is an X-ray CT image (cross-sectional view perpendicular to the irradiated surface) showing the void configuration in the 3D printed article after pressurizing.
FIG. 7 is an X-ray CT image (cross-sectional view from the irradiated surface) showing the void configuration in the 3D printed article after pressurizing.
FIG. 8 is an X-ray CT image (cross-sectional view perpendicular to the irradiated surface) showing the void configuration in the 3D printed article after pressurizing.

### Description of Embodiments

Embodiments of the present invention are described.

The present invention is a method for producing a fiber-reinforced resin article. The fiber-reinforced resin article is also referred to as a fiber-reinforced resin (plastic) product. The fiber-reinforced resin article includes at least fibers and a resin. The method includes a 3D printing step. In the 3D printing step, forming is performed by a 3D printer. In the 3D printing step, at least fibers and a resin are used as materials. Examples of the 3D printing step include the following steps: a step in which fibers and a resin are molded by an additive manufacturing device (3D printer) including a nozzle; a step in which fibers and a resin are molded by an additive manufacturing device (3D printer) using the fused deposition molding method; a step in which fibers and a resin are molded using an additive manufacturing technology that does not include a step of coating and printing uncoagulated coagulant on a top surface of a laminate or on a surface of a sheet bonded to the laminate, based on laminate area data in a specified cross-section of a 3D model, does not include a step of laminating a sheet on which the uncoagulated coagulant has been coated and printed and the laminate by overlapping and bonding them under heat retention, or does not include a bonding step in which sheets with a coagulant selectively applied to the surface are laminated and the coagulant selectively bonds the sheets together; and a step in which an additive manufacturing technology excluding the one including a step of laminating and bonding sheets coated with a coagulant is used to form an article using fibers and resins. Of course, the present embodiment is not limited to these examples.

In the 3D printing step, a resin (plastic) and fibers are used. In the step described above, the resin (the resin that serves as a matrix) and fibers may be supplied (discharged) separately from nozzles. These materials may be supplied (discharged) simultaneously. They may be supplied (discharged) with a time delay. A fiber-reinforced plastic material (a material with fibers dispersed in a resin) may be supplied (discharged) from a single nozzle. The step described above resulted in a fiber-reinforced plastic product (3D printed article) with the desired shape. An article having the substantially identical shape to that of the fiber-reinforced plastic product A may be formed in a single (one) 3D printing step. The product A may be a combination of the parts A1, ..., Ak (where k is an integer of n or less), ..., and An (where n is an integer of 2 or more). In such a case, the part A1 is formed by a single (one) 3D printing step A1. Similarly, the part Ak is formed by a single (one) 3D printing step Ak. The part An is formed by a single (one) 3D printing step An. When the parts A1, ..., Ak, ..., An formed by the 3D printing steps A1, ..., Ak, ... An are assembled, this assembly has the same shape as the product A. That is, there are a case where only a single (one) 3D printing step is needed, and a case where twice or more (two or more) steps are needed. Selection of the case is determined depending on the configuration of the product A. The product obtained in the 3D printing step may be preformed before the pressurizing step. The preforming produces a product with a shape close to that of the final product. Of course, there may be a case where the preforming is unnecessary. The preforming here refers to the forming of an article performed between the 3D printing step and the pressurizing step. In the product (fiber-reinforced plastic product) obtained in the step described above, the fibers in the product are preferably dispersed in the plastic (matrix resin). Preferably, the 3D printing step was performed in such a manner that the fibers were dispersed in the plastic (resin). The 3D printing step may be performed under a known condition. Alternatively, a special condition may be employed.

The method described above includes a pressurizing step. In the pressurizing step, a 3D printed article is pressurized. The 3D printed article is obtained by the 3D printing step described above. The pressurizing step is performed at a temperature where the resin of the 3D printed article is softened. Heating to the temperature at which the resin is softened is performed, for example, without contact between the 3D printed article and the heating device (heating source) that heats the 3D printed article. The heating time of the heating was preferably 0.1 second or more, even more preferably 1 second or more. The heating time was preferably within 10 minutes, and even more preferably within 5 minutes. The heating is preferably, for example, by induction heating. The heating is preferably, for example, by infrared irradiation. The heating is preferably, for example, by laser irradiation. The heating is preferably, for example, by microwave irradiation. When the 3D printed article was heated by any of the heating methods described above, its mechanical properties such as flexural strength and flexural modulus were better compared to the case where the 3D printed article loaded inside a heated mold was heated. The temperature at which the resin of the 3D printed article is softened was preferably from (a softening temperature of the resin - 100°C) to (a softening temperature of the resin + 300°C), more preferably (a softening temperature of the resin - 50°C) or higher, even more preferably (a softening temperature of the resin + 250°C) or lower, and yet even more preferably a softening temperature of the resin or higher. The temperature was, for example, 90°C or higher. The temperature was, for example, 500°C or lower. Furthermore, the temperature was, for example, 450°C or lower. Furthermore, the temperature was, for example, 400°C or lower. The concept (term) "softening temperature" may be any concept (term) among the melting point, glass transition point, and softening point. The concept (term) used is selected according to the resin. When the resin has a melting point, the softening temperature is the melting point. When the resin has the melting point, glass transition point, and softening point, the highest temperature among them is preferred to be employed. For example, in a case where the resin has the melting point (Mp) and glass transition point (Tg), and Tg = 140°C and Mp = 340°C, the melting point is the softening temperature. The temperature during the pressurizing is as described above. According to the invention, the 3D printed article is heated before the 3D printed article is disposed in a pressurizing device (mold).
Even if the article is heated to a temperature higher than the temperature described above, it is sufficient if the temperature at the time of pressurizing is the approximately same as the temperature described above by natural cooling. The pressurizing device (mold) itself may or may not be heated. In a case where the temperature of the pressurizing device (mold) is low, when the 3D printed article is disposed in the pressurizing device (mold), the temperature of the 3D printed article may be lower than the temperature described above. In view of this, it is preferable that the pressurizing device, especially the mold in which the 3D printed article is disposed, is heated.

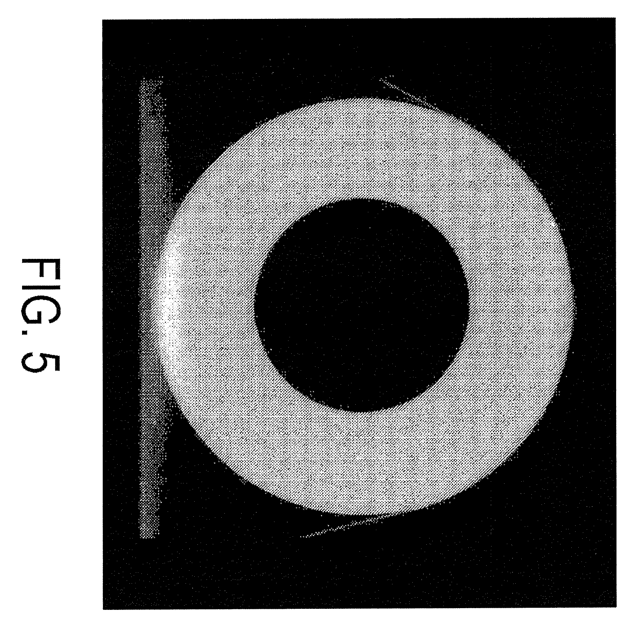

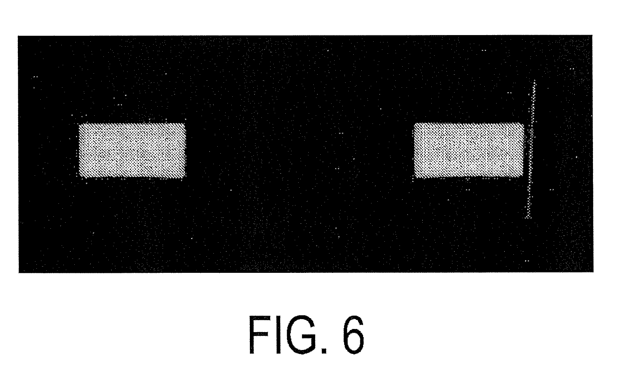

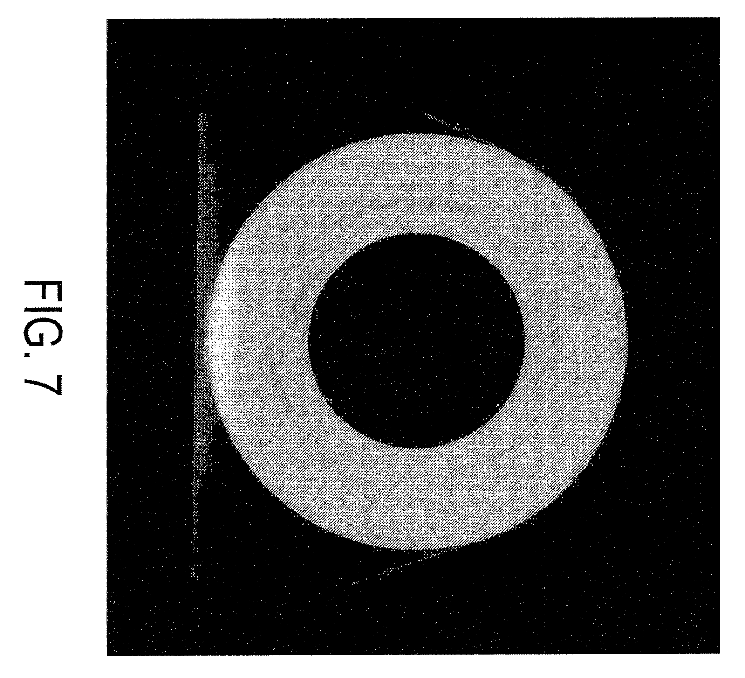

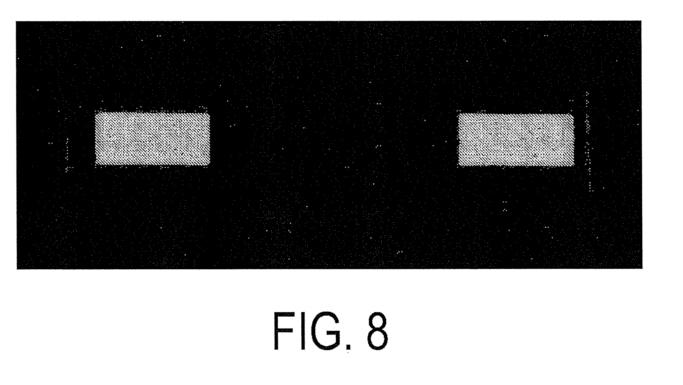

The heating described above is preferably performed by the induction heating method. The device used for induction heating was preferably an electromagnetic induction heating device. The device used for induction heating was particularly preferably a high-frequency induction heating device. The frequency used for induction heating was preferably 1 kHz or higher. The frequency used for induction heating was even more preferably 10 kHz or higher. The frequency used for induction heating was preferably 10 MHz or lower. The frequency used for induction heating was even more preferably 400 kHz or lower. The use of an electromagnetic induction heating device (high-frequency induction heating device) exerted the effect on reducing the voids in the 3D printed article after the pressurizing. FIGS. 5 and 6 are X-ray CT images showing presence of the void in the pressurized molded article when the 3D printed article which has been pre-heated by induction heating is disposed in a mold and pressurized. FIGS. 7 and 8 are X-ray CT images showing presence of the void in the pressurized molded article when the 3D printed article disposed in the mold is heated and pressurized by heating the mold. The comparison between the X-ray CT images in FIGS. 5 and 6 and those in FIGS. 7 and 8 indicates that when the induction heating method is used for heating, there are fewer voids in the pressurized molded article. This feature would be unpredictable. The 3D printed article (fiber-reinforced resin article) with the fewer voids has the higher the mechanical strength. When the induction heating method is used, the 3D printed article is heated from the inside. This efficiently softens the 3D printed article. The softening proceeds in a short time. For example, the time required for softening was less than 1/5 of the time required for a method in which the article is heated from the surface, such as the infrared irradiation heating method. When the induction heating method is used, the fibers must be conductive fibers. Examples of the conductive fibers include metal fibers, carbon fibers, or conductive polymers. Of these, carbon fibers were the most preferred. The thickness of the 3D printed article was preferably 0.1 cm or more. The thickness of the 3D printed article was more preferably 0.3 cm or more. In other words, in a case where the induction heating method is used, compared to the case where the infrared heating method is used, temperature irregularities were less likely to occur even if the 3D printed article was thick. Therefore, the induction heating method was suitable for the 3D printed article with a thicker thickness. There is no particular restriction on the upper limit of the thickness. When the 3D printed article was large (flat area was large), heating performance of induction heating failed to be effective. The method was suitable for a small product. Therefore, when the induction heating method was used, a length of one side in the longitudinal direction of the 3D printed article was preferably 20 cm or less, and more preferably 10 cm or less.

The heating described above is preferably performed by the infrared irradiation method. Examples of the infrared rays include short wavelengths, medium wavelengths, near infrared, and far infrared wavelengths. For example, when the 3D printed article was relatively large in area, the use of the infrared irradiation method was preferable to the use of the induction heating method. For example, the 3D printed article had a length of one side in the longitudinal direction of preferably 5 cm or more, and more preferably 10 cm or more. When the 3D printed article satisfies the following requirements A, B, and C, the use of the infrared irradiation method was preferred.
Requirement A: The 3D printed article is a flat plate article.
Requirements B: Thickness is 1.5 cm or less.
Requirement C: 1 ≤ {(a thickness of the thickest portion)/(a thickness of the thinnest portion) ≤ 2

In a case of where the infrared irradiation method was used, when a ratio of the irradiated surface to the thickness was from 20 to 500 (unit: mm), there was little temperature unevenness during heating.

When the infrared irradiation method is used, the requirement that the fibers must be conductive fibers is unnecessary. The fibers may be any fibers used for reinforcement applications. There is a high degree of freedom in the selection of the fibers.

The heating described above is preferably performed by the laser irradiation method. For example, when the 3D printed article satisfied the following requirements D, E, and F, the laser irradiation method was preferred.

Requirement D: The 3D printed article is a three-dimensional article.

Requirement E: The three-dimensional article has a part with a maximum thickness of 1.5 cm or more.

Requirement F: 2 ≤ {(the thickness of the thickest portion)/(the thickness of the thinnest portion)

Examples of the three-dimensional article include articles having a substantially L-shape, H-shape, or T-shape cross section, or substantially convex articles. Of course, the article may have the shape described above in some parts. In case of the article having the substantially L-shaped cross section, the "thickness of the thickest portion" is the length of the vertical part (|) of the article. In case of the article having the substantially L-shaped cross section, the "thickness of the thinnest portion" is the thickness of the horizontal part (-) of the article. In the case of the articles having the shape described above, the use of the laser irradiation method was preferable to the use of the infrared irradiation method.

When the ratio of the maximum thickness to minimum thickness of the irradiated surface was from 5 to 40 and/or the ratio of the irradiated surface to the maximum thickness was from 5 to 40 (unit: mm), the use of a laser irradiation device was preferred.

When the laser irradiation method is used, the requirement that the fibers must be conductive fibers is unnecessary. The fibers may be any fibers used for reinforcement applications. There is a high degree of freedom in the selection of the fibers.

The heating is preferably performed by the microwave irradiation method. For example, when the 3D printed article satisfied the following requirements G and H, the microwave irradiation method was preferred.

Requirement G: The 3D printed article is a three-dimensional article.

Requirement H: The three-dimensional article has a protrusion (for example, an acute angular protrusion, such as a protrusion with an acute angular edge).

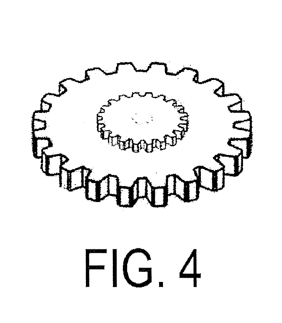

An example of a three-dimensional article with acute angular protrusions is a gear-shaped article. As can be seen in FIG. 4, the acute angular protrusion also includes a shape with its tip of the acute angular protrusion missing.

When the microwave irradiation method is used, the requirement that the fibers must be conductive fibers is unnecessary. The fibers may be any fibers used for reinforcement applications. There is a high degree of freedom in the selection of the fibers.

The relationship between the shape of the 3D printed article and the heating method is shown in Table 1 below.

**Table 1**

| | | Characteristics of article to be heated | | | |
|---|---|---|---|---|---|
| | | Containing conductive fibers | Thickness: 1.5 cm or less 1 ≤ T/tw ≤ 2 | Thickness: 1.5 cm or more 2 ≤ T/tw | Three-dimensional article with acute angular protrusion on the end edge |
| Heating method | Induction heating | Excellent | Good | Good | Good |
| | Infrared heating | Good | Excellent | Good | Marginal |
| | Laser heating | Good | Marginal | Excellent | Marginal |
| | Microwave heating | Good | Marginal | Marginal | Excellent |

| | | | | | |
|---|---|---|---|---|---|
| * T: Thickness at the thickest portion t: Thickness at the thinnest portion | | | | | |

In the pressurizing step, the product obtained in the 3D printing step (or the preformed product if there is a preforming step) is pressurized. For example, in this step, the product obtained in the 3D printing step (or the preformed product if there is a preforming step) is disposed in a mold of a predetermined shape (for example, a forming die (mold)) and pressurized. The temperature of the product (3D printed article) during the pressurizing step is as described above. The product is heated before this step. The pressurizing step was performed under conditions (pressure) of preferably 0.01 MPa or more. The pressurizing step was performed under conditions (pressure) of more preferably 0.1 MPa or more. The pressurizing step was performed under conditions (pressure) of even more preferably 0.5 MPa or more. The pressurizing step was performed under conditions (pressure) of preferably 100 MPa or less. The pressurizing step was performed under conditions (pressure) of more preferably 70 MPa or less. The pressurizing step was performed under conditions (pressure) of even more preferably 50 MPa or less. When the pressure was too low, the effect of the invention were small. When the pressure was too high, the features did not improve proportionally. When the pressure was too high, the cost was high. As such, the range described above was preferred. The pressurizing time was preferably 0.5 seconds or more. The pressurizing time was more preferably 1 second or more. The upper limit of the pressurizing time is not particularly limited. However, if the pressurizing time is too long, it is not economical. Therefore, the upper limit of the pressurizing time is about 30 minutes.

The improvement in mechanical strength (for example, tensile strength and/or flexural strength) was achieved by undergoing the pressurizing step compared to the case where the pressurizing step was not performed.

When only plastic (non-reinforced plastic) was used alone as the constituent material in place of fiber-reinforced plastic, there was no significant difference in the mechanical properties of the products obtained by the additive manufacturing technology with and without the pressurizing step.

However, the mechanical properties of the fiber-reinforced plastic product differed greatly depending on the presence or absence of the pressurizing step.

The inventors consider the reason for the improvement in mechanical strength is as follows. The fiber-reinforced plastic products obtained by the additive manufacturing technology have voids (cells) inside. The voids were likely caused by fibers. It was considered that the presence of the voids in the product lead to insufficient degree of improvement in the mechanical strength of the product. However, when the product after the additive manufacturing technology process was pressurized (especially heated and pressurized), the number of the voids decreased (or the voids disappeared), which was thought to improve the mechanical strength of the product.

The resin (plastic) may be any resin (matrix resin) that can be used in the 3D printing step (additive manufacturing technology). A thermoplastic resin may be used. A thermosetting resin may be used. Either one may be used alone, or these resins may be used in combination. The resin may be one type or two or more types. The resin may be in the form of a film (or sheet) or fibers (threads or filaments). When the resin is fibrous, it is a so-called commingled yarn (see, for example, see WO 2016/167136 A1) in the present invention. In the case of a commingled yarn, the technology disclosed in WO 2016/167136 A1 can be employed. The resin preferably has a functional group (reactive group: polar group). Resins not having a functional group (reactive group: polar group) can also be used.

The thermoplastic resin may be a resin constituted of only a thermoplastic resin, or may be a resin containing the thermoplastic resin as a main component. The molding material of the present invention may contain a thermoplastic resin according to either of these cases. In the present invention (the present specification), unless otherwise specified, the term "thermoplastic resin" includes both the case in which the resin is constituted of only a thermoplastic resin, and the case in which the resin contains a thermoplastic resin as a main component. Using the thermoplastic resin as a main component means that the thermoplastic resin accounts for 50 mass% or more. The thermoplastic resin preferably accounts for 80 mass% or more, and more preferably 90 mass% or more.

The thermosetting resin may be a resin constituted of only a thermosetting resin, or may be a resin containing the thermosetting resin as a main component. The molding material of the present invention may contain a thermoplastic resin according to either of these cases. In the present invention (the present specification), unless otherwise specified, the term "thermosetting resin" includes both the case in which the resin is constituted of only a thermosetting resin, and the case in which the resin contains a thermosetting resin as a main component. Using the thermosetting resin as a main component means that the thermosetting resin accounts for 50 mass% or more. The thermoplastic resin preferably accounts for 80 mass% or more, and more preferably 90 mass% or more.

Examples of the thermosetting resin include epoxy resins, vinyl ester resins, unsaturated polyester resins, diallyl phthalate resins, phenolic resins, maleimide resins, bismaleimide resins, cyanate resins, benzoxazine resins, and dicyclopentadiene resins.

Examples of thermoplastic resins include polyolefin resins, polystyrene resins, thermoplastic polyamide resins, polyester resins, polyacetal resins (polyoxymethylene resins), polycarbonate resins, (meth)acrylic resins, polyarylate resins, polyphenylene ether resins, polyimide resins, polyether nitrile resins, phenoxy resins, polyphenylene sulfide resins, polysulfone resins, polyketone resins, polyetherketone resins, thermoplastic urethane resins, fluororesins, and thermoplastic polybenzimidazole resins.

Examples of the polyolefin resin include polyethylene resins, polypropylene resins, polybutadiene resins, polymethylpentene resins, vinyl chloride resins, vinylidene chloride resins, vinyl acetate resins, and polyvinyl alcohol resins.

Examples of the polystyrene resin include polystyrene resins, acrylonitrile-styrene resins (AS resins), and acrylonitrile-butadiene-styrene resins (ABS resins).

Examples of the polyamide resin include polyamide 6 resin (nylon 6), polyamide 11 resin (nylon 11), polyamide 12 resin (nylon 12), polyamide 46 resin (nylon 46), polyamide 66 resin (nylon 66), and polyamide 610 resin (nylon 610). Examples of nylon (hereinafter, may be abbreviated as "PA"), which is one type of polyamide resin, include PA6 (also referred to as polycaproamide, polycaprolactam, and poly ε-caprolactam), PA26 (polyethylene adipamide), PA46 (polytetramethylene adipamide), PA66 (polyhexamethylene adipamide), PA69 (polyhexamethylene adipamide), PA610 (polyhexamethylene sebacamide), PA611 (polyhexamethylene undecamide), PA612 (polyhexamethylene dodecamide), PA11 (polyundecane amide, PA12 (polydodecane amide), PA1212 (polydodecamethylene dodecamide), PA6T (polyhexamethylene terephthalamide), PA61 (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA101 (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), polyamide XD6 (polymetaxylylene adipamide), and polyamide XD10 (polyxylylene sebacamide).

Examples of the polyester resin include polyethylene terephthalate resin, polyethylene naphthalate resin, polybutylene terephthalate resin, polytrimethylene terephthalate resin, and liquid crystal polyester.

Examples of the (meth)acrylic resin include polymethyl methacrylate.

Examples of the modified polyphenylene ether resin include modified polyphenylene ethers and the like.

Examples of the thermoplastic polyimide resin include thermoplastic polyimide, polyamide-imide resin, and polyetherimide resin.

Examples of the polysulfone resin include modified polysulfone resins, and polyether sulfone resins.

Examples of the polyetherketone resin include polyether ketone resin, polyether ether ketone resin, and polyether ketone ketone resin.

Examples of the fluororesin include polytetrafluoroethylene, and the like.

Examples of the fibers in the fiber-reinforced resin include inorganic fibers. Organic fibers may be used. A combination of both organic and inorganic fibers may also be used. The fibers are preferably continuous fibers with a fiber length of 3 cm or more. The average fiber length of the continuous fibers is not particularly limited, but was preferably from 0.05 to 20000 m, more preferably 0.1 m or more, even more preferably 0.5 m or more, even more preferably 5 m or more, yet even more preferably 1 m or more, preferably 10000 m or less, and more preferably 7000 m or less, for example, from 100 to 10000 m or from 1000 to 7000 m from the viewpoint of molding processability. Unless otherwise stated, the length of the fibers in the present invention is the weight average fiber length. The average fiber diameter of the fibers was preferably 3 µm or more, more preferably 4 µm or more, even more preferably 5 µm or more, preferably 50 µm or less, more preferably 20 µm or less, and even more preferably 12 µm or less. The average fiber diameter is the diameter of a single fiber.

Examples of the inorganic fibers include carbon fibers, silicon carbide fibers, alumina fibers, boron fibers, glass fibers, and metal fibers. However, the inorganic fibers are not limited thereto. Particularly preferred were conductive fibers, such as carbon fibers.

Examples of the carbon fibers include polyacrylonitrile (PAN) based carbon fibers, petroleum/coal pitch-based carbon fibers, rayon-based carbon fibers, cellulose-based carbon fibers, lignin-based carbon fibers, phenol-based carbon fibers, and vapor phase growth-based carbon fibers. Among these, one or more types may be used, as appropriate. The carbon fibers used preferably had a tensile modulus from 100 GPa to 1000 GPa. The form of the carbon fibers is not particularly limited. The carbon fibers may be in a form of continuous or discontinuous fibers. Examples of continuous fibers include those in which carbon fibers are arranged in one direction (unidirectional material). When discontinuous fibers are used, examples include materials arranged so that the carbon fibers are oriented in a specific direction in the resin, and materials in which the carbon fibers are randomly dispersed and arranged in the in-plane direction in the resin. The carbon fiber may be a single fiber, a fiber bundle, or a mixture of both. Carbon fibers are generally in the form of a fiber bundle in which thousands to tens of thousands of filaments are assembled. For a case in which a carbon fiber bundle is used as the carbon fibers, when the carbon fiber bundle is used as is, the entangled portion of the fiber bundle becomes locally thick, which may make it difficult to obtain a carbon-fiber-reinforced resin workpiece having a thin-walled end surface. Therefore, when a carbon fiber bundle is used as the carbon fibers, the carbon fiber bundle is preferably widened or opened, and then used.

Examples of the metal fibers include Al fibers, Au fibers, Ag fibers, Fe fibers, Cu fibers, and stainless steel fibers.

Examples of organic fibers include aramid fibers, aromatic polyamide fibers, cellulose fibers, polyethylene fibers, and poly(paraphenylene benzobisoxaxole) fibers (Zylon (available from Toyobo Co., Ltd.)).

The fibers may be treated with a treatment agent. Examples of the treatment agent include a sizing agent. Another example is a surface treatment agent. Examples thereof include the treatment agents disclosed in JP 4894982 B. It is advantageous for the treatment agent on the fiber surface to react with a functional group (reactive group: polar group) of the resin.

The treatment agent is selected from the group consisting of, for example, epoxy resins, urethane resins, silane coupling agents, water-insoluble polyamide resins, and water-soluble polyamide resins. The treatment agent is preferably selected from the group consisting of epoxy resins, urethane resins, water-insoluble polyamide resins, and water-soluble polyamide resins. A single type of treatment agent may be used, or two or more types may be combined and used.

Examples of the epoxy resin include glycidyl compounds (for example, epoxy alkane, alkane diepoxide, bisphenol A-glycidyl ether, a dimer of bisphenol A-glycidyl ether, a trimer of bisphenol A-glycidyl ether, an oligomer of bisphenol A-glycidyl ether, a polymer of bisphenol A-glycidyl ether, bisphenol F-glycidyl ether, a dimer of bisphenol F-glycidyl ether, a trimer of bisphenol F-glycidyl ether, an oligomer of bisphenol F-glycidyl ether, a polymer of bisphenol F-glycidyl ether, stearyl glycidyl ether, phenyl glycidyl ether, ethylene oxide lauryl alcohol glycidyl ether, ethylene glycol diglycidyl ether, polyethylene glycol diglycidyl ether, and propylene glycol diglycidyl ether), glycidyl ester compounds (for example, glycidyl benzoate, glycidyl p-toluate, glycidyl stearate, glycidyl laurate, glycidyl palmitate, glycidyl oleate, glycidyl linoleate, glycidyl linolenate, and diglycidyl phthalate), and glycidyl amine compounds (for example, tetraglycidyl amino diphenylmethane, triglycidyl aminophenol, diglycidyl aniline, diglycidyl toluidine, tetraglycidyl meta-xylene diamine, triglycidyl cyanurate, and triglycidyl isocyanurate).

Examples of the urethane resin include polyols, polyols obtained by esterifying fats and polyhydric alcohols, and urethane resins obtained by reacting a polyisocyanate with a compound having an OH group.

Examples of the polyisocyanate include aliphatic isocyanates (for example, 1,4-tetramethylene diisocyanate, 1,6-hexamethylene diisocyanate, 2,2,4-trimethylhexamethylene diisocyanate, 2,8-diisocyanate methylcaproate), alicyclic diisocyanates (for example, 3-isocyanatomethyl-3,5,5-trimethylcyclohexyl isocyanate, methylcyclohexyl-2,4-diisocyanate), aromatic diisocyanates (for example, toluylene diisocyanate, diphenylmethane diisocyanate, 1,5-naphthene diisocyanate, diphenylmethylmethane diisocyanate, tetraalkyldiphenylmethane diisocyanate, 4,4-dibenzyl diisocyanate, and 1,3-phenylene diisocyanate), and halogenated diisocyanates (for example, chlorinated diisocyanates and brominated diisocyanates). The polyisocyanate may be one type or two or more types.

Examples of the polyol include ordinary polyols used in the production of urethane resins. Examples thereof include diethylene glycol, butanediol, hexanediol, neopentyl glycol, bisphenol A, cyclohexane dimethanol, trimethylolpropane, glycerin, pentaerythritol, polyethylene glycol, polypropylene glycol, polyester polyol, polycaprolactone, polytetramethylene ether glycol, polythioether polyol, polyacetal polyol, polybutadiene polyol, and furan dimethanol. The polyol may be one type or two or more types.

Examples of the silane coupling agent include trialkoxy or triallyloxy silane compounds (for example, aminopropyl triethoxysilane, phenylaminopropyl trimethoxysilane, glycidylpropyl triethoxysilane, methacryloxypropyl trimethoxysilane, and vinyl triethoxysilane), ureido silane, sulfidosilane, vinylsilane, and imidazole silane. The silane coupling agent may be one type or two or more types.

The water-insoluble polyamide resin is one for which 99 mass% or more does not dissolve when 1 g of the polyamide resin is added to 100 g of water at 25°C. When a water-insoluble polyamide resin is used, the water-insoluble polyamide resin is preferably used by dispersing (or suspending) the resin in a powdered form in water (or an organic solvent). A commingled bundle can also be immersed in a dispersion (or suspension) of such a powdered water-insoluble polyamide resin and dried to form commingled yarns.

Examples of the water-insoluble polyamide resin include polyamide 6, polyamide 66, polyamide 610, polyamide 11, polyamide 12, and xylylene diamine-based polyamide resin (preferably, polyxylylene adipamide and polyxylylene sebacamide). Alternatively, a copolymer of the above may be used. The powder of the polyamide resin may be emulsified and dispersed by a surfactant (for example, a nonionic surfactant, a cationic surfactant, an anionic surfactant, or a mixture thereof). Commercially available products of water-insoluble polyamide resins (water-insoluble nylon emulsions) include, for example, Sepolsion PA (available from Sumitomo Seika Chemicals Co., Ltd.), and Michem Emulsion (available from Michelman, Inc.).

The water-soluble polyamide resin is one for which 99 mass% or more dissolves in water when 1 g of the polyamide resin is added to 100 g of water at 25°C. Examples of the water-soluble polyamide resin include modified polyamides such as an acrylic acid grafted N-methoxymethylated polyamide resin, and an amide group-added N-methoxymethylated polyamide resin. Examples of commercially available water-soluble polyamide resins include AQ-Nylon (available from Toray Industries, Inc.), and Toresin (available from Nagase Chemtex Corp.).

The amount of the treatment agent is preferably from 0.001 to 1.5 mass%, more preferably from 0.1 to 1.2 mass%, and even more preferably from 0.5 to 1.1 mass% of the reinforcing fibers (for example, carbon fibers).Dispersibility of the reinforcing fibers was improved by setting the amount of the treatment agent to such a range.

A known method can be adopted as the treatment method using the treatment agent. For example, the fibers may be immersed in a treatment agent solution. Through this, the treatment agent adheres to the fiber surface. A technique for air blowing a treatment agent onto the surface of the fibers can also be used. Fibers that have already been treated with a surface treatment agent (or a treatment agent) may also be used. Commercially available fibers to which the surface treatment agent (or treatment agent) is adhered may be washed, and a surface treatment agent (or treatment agent) may be once again adhered thereto.

The percentage of fibers with a length of greater than 3 cm was preferably 30 vol% or more, more preferably 40 vol% or more, and even more preferably 45 vol% or more, or more preferably 30 mass% or more, more preferably 42 mass% or more, and even more preferably 55 mass% or more. There is no special restriction on the upper limit. One criterion for the upper limit is, for example, 60 vol%, and preferably 70 vol%. Alternatively, the upper limit is preferably 80 mass%.

A preferable resin used in the commingled yarn is a thermoplastic resin. Examples of the thermoplastic resin include polyolefin resins (for example, polyethylene and polypropylene), polyamide resins, polyester resins (for example, polyethylene terephthalate and polybutylene terephthalate), polycarbonate resins, polyoxymethylene resins, polyether ketones, polyether sulfones, and thermoplastic polyether imides. Of these, polyamide resins were preferred.

The thermoplastic resin composition may include an elastomer component. Examples of the elastomer component include polyolefin-based elastomers, diene-based elastomers, polystyrene-based elastomers, polyamide-based elastomers, polyester-based elastomers, polyurethane-based elastomers, fluorine-based elastomers, and silicon-based elastomers. The elastomer component is preferably a polyolefin-based elastomer or a polystyrene-based elastomer. Modified elastomers modified by an α,β-unsaturated carboxylic acid and acid anhydrides thereof, acrylamide and derivatives thereof, or the like in the presence (or absence) of a radical initiator are also preferable. These elastomers are used to impart miscibility with the polyamide resin. When the elastomer was used, the blending amount of the elastomer component was preferably from 5 to 25 mass% of the thermoplastic resin composition.

Furthermore, various additives (for example, antioxidants, stabilizers such as thermal stabilizers, hydrolysis resistance improving agents, weather resistant stabilizers, matting agents, UV absorbers, infrared absorbers, nucleating agents, plasticizers, dispersants, flame retardants, antistatic agents, anti-coloration agents, anti-gelling agents, colorants, release agents, and the like) may be added to the thermoplastic resin composition within a scope that does not impair the article and effect of the present invention. For details, refer to the disclosure of JP 4894982 B, the contents of which are incorporated herein. The thermoplastic resin composition may include a filler. However, a filler is preferably not included. Specifically, the filler content in the thermoplastic resin composition was preferably 3 mass% or less.

Examples of the polyamide resin include polyamide 4, polyamide 6, polyamide 11, polyamide 12, polyamide 46, polyamide 66, polyamide 610, polyamide 612, polyhexamethylene terephthalamide (polyamide 6T), polyhexamethylene isophthalamide (polyamide 61), polyamide 66/6T, XD polyamides (for example, polyxylylene adipamide, polyxylylene sebacamide, and polyxylylene dodecamide), polyamide 9T, polyamide 9MT, and polyamide 6I/6T.

Among the polyamide resins described above, from the viewpoint of ease of formation and heat resistance, the polyamide resin (XD-based polyamide) containing diamine-derived constituent units and dicarboxylic acid-derived constituent units, in which 50 mol% or more of the diamine-derived constituent units are derived from xylenediamine, was preferred. In the XD-based polyamide resin, preferably 70 mol% or more of the diamine-derived constituent units were derived from xylenediamine. More preferably, 90 mol% or more of the diamine-derived constituent units were derived from xylenediamine. When the polyamide resin was a mixture, the ratio of XD-based polyamide in the polyamide resin was preferably 50 mass% or more. More preferably, the ratio was 80 mass% or more.

In the XD-based polyamide, preferably 70 mol% or more (more preferably 80 mol% or more, even more preferably 90 mol% or more) of the diamine-derived constituent units are derived from meta-xylenediamine and/or para-xylenediamine, and preferably 50 mol% or more (more preferably 70 mol% or more, even more preferably 80 mol% or more, and particularly preferably 90 mol% or more) of the dicarboxylic acid-derived constituent units are derived from α,ω-linear aliphatic dicarboxylic acids (preferably with 4 to 20 carbon atoms).

The diamine constituting the XD-based polyamide preferably contains meta-xylenediamine. More preferably, 30 mol% or more, even more preferably, 51 mol% or more, and yet even more preferably, 70 mol% or more of the diamine is meta-xylenediamine.

Examples of the diamine besides meta-xylenediamine and para-xylenediamine that can be used as raw material diamine components for the XD-based polyamide include aliphatic diamines (for example, tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine), alicyclic diamines (for example,, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane), diamines having aromatic ring(s) (for example, bis(4-aminophenyl)ether, para-phenylenediamine, and bis(aminomethyl)naphthalene). The diamine may be used alone or in combination of two or more thereof.

When a diamine other than xylenediamine was used as the diamine component, the diamine-derived constituent unit was preferably less than 50 mol%, more preferably 30 mol% or less, even more preferably 25 mol% or less, and yet even more preferably 20 mol% or less. The lower limit was preferably 1 mol%, and more preferably 5 mol%.

The raw material dicarboxylic acid component of polyamide resin was preferably α,ω-linear aliphatic dicarboxylic acid (preferably with from 4 to 20 carbon atoms). Examples thereof include succinic acid, glutaric acid, pimelic acid, suberic acid, azelaic acid, adipic acid, sebacic acid, undecanedioic acid, and dodecanedioic acid. The acid may be used alone or in combination of two or more thereof. Among the above acids, adipic acid or sebacic acid was preferably used because the melting point of the polyamide resin was in the appropriate range for molding and processing. Sebacic acid was particularly preferred.

An embodiment of the present invention is presented below. The following example is only one example of the present invention, and the present invention is not limited to the example described below. The scope of the invention is defined by the appended claims.

### Example 1

XD10 (available from Mitsubishi Gas Chemical Company. Inc.) was used as a resin (thermoplastic resin). The XD10 was obtained as follows. In a reaction vessel equipped with a stirrer, a partial condenser, a total condenser, a thermometer, a dropping funnel, a nitrogen introduction tube, and a strand die, 10 kg (49.4 mol) of sebacic acid (TA grade, available from Itoh Oil Chemicals Co., Ltd.) and 11.66 g of sodium acetate/sodium hypophosphite monohydrate (molar ratio = 111.5) were charged. Nitrogen purging was sufficiently performed. Thereafter, in the system, heating and melting (~170°C) were performed while stirring under a small amount of nitrogen flow. 6.647 kg of mixed xylenediamine (34.16 mol of meta-xylenediamine and 14.64 mol of para-xylenediamine, available from Mitsubishi Gas Chemical Company, Inc.) was added dropwise to melted sebacic acid under stirring. The temperature was raised to 240°C over a period of 2.5 hours while the condensed water generated was drained out of the system. After dropwise addition was completed, the internal temperature was increased, and when it reached 250°C, the pressure inside the reaction vessel was reduced. The melt polycondensation reaction was continued by further increasing the internal temperature to 255°C for 20 minutes. Thereafter, the system was pressurized with nitrogen. The obtained polymer was taken out from the strand die and pelletized. A polyamide resin XD 10 was thus obtained. The melting point of the polyamide resin XD 10 was 213°C. The number average molecular weight was 15400. The XD was dried in a vacuum dryer. This dry XD was melt-extruded from a single screw extruder (with a 30 mmϕ screw). Extrusion formation was performed using a T-die (500 mm wide). A film was obtained by a pair of rollers (stainless steel, surface with uneven grain, roller temperature: 70°C, and roll pressure: 0.4 MPa). The film had a grainy surface. The edges of the film were slit. A cast film (thickness: 20 µm, width: 500 mm) was obtained.

Carbon fibers (Pyrofil-TR-50S-12000-AD, 8000 dtex, number of fibers: 12000, available from Mitsubishi Rayon Co., Ltd.) were used as the fibers. The average length of the carbon fiber was 5000 m.

A laminate of a sheet-shaped article with carbon fibers drawn and oriented in one direction and the XD film (carbon fiber percentage: 45 vol%) was heated (220°C) and pressurized (1 MPa). Fluoropolymer-coated rollers were used for the heating and pressurizing described above. After the heating and pressurizing, the article was cooled with a roller at 40°C. The composite material was slit to the width of 0.8 mm. The leading end was fixed to the core material and wound (winding tension: 0.1 MPa, winding speed: 1 m/min, temperature: 25°C, and relative humidity: 50%).

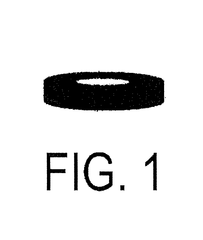

An additive manufacturing technology was performed (nozzle temperature: 250°C, stage temperature: 60°C) using the composite material (laminate and slit materials) and a 3D printer (K8200, available from Velleman). A 3D printed article (annular article (see FIG. 1), outer diameter: 2 cm, inner diameter: 1 cm, thickness: 2 mm, the longitudinal direction of the fibers (direction of fibers) was oriented in the circumferential direction in the annular article) was obtained. The average length of the carbon fibers in the 3D printed article was 2 m.

The product (3D printed article) in FIG. 1 was irradiated with a high frequency electromagnetic induction heating device (available from Dai-ichi Dentsu Ltd.) for 5 seconds before being disposed in a mold. This heated the product to 300°C.

The heated product (3D printed article) was disposed into a mold (the inner shape of the mold corresponded to the outer shape of the product in FIG. 1). The mold was heated beforehand to the glass transition temperature Tg + 50°C (120°C) of the thermoplastic resin. Pressurizing (temperature: 300°C, pressure: 10 MPa, time: 10 seconds) was performed using a servo press machine (available from Dai-ichi Dentsu Ltd.). Since the pressurizing was immediately after the heating, the temperature was approximately 300°C. The pressurizing direction (main pressurizing direction) was perpendicular to the top surface in FIG. 1. This direction was orthogonal(perpendicular) to the longitudinal direction of the carbon fibers.

### Reference Example 1

The same procedure as in Example 1 was performed except that the heating and pressurizing step was omitted.

### Reference Example 2

The same procedure as in Example 1 was performed except that the carbon fibers were not used.

### Reference Example 3

The same procedure as in Example 1 was carried out except that the carbon fibers were not used and the heating and pressurizing step was omitted.

### Reference Example 4

The 3D printed article shown in FIG. 1 was disposed in a mold. The heating by the high frequency electromagnetic induction heating device was not performed on the 3D printed article. The mold was heated. The temperature of the 3D printed article was 300°C. Thereafter, pressurizing (temperature: 300°C, pressure: 10 MPa, time: 10 seconds) was performed using a servo press machine (available from Dai-ichi Dentsu Ltd.).

Test specimens (length: 100 mm, width: 15 mm, thickness: 2 mm) were molded through the same steps as in Example 1 and Reference Examples 1, 2, 3, and 4. The fibers contained in the test specimens had the fiber longitudinal direction (fiber direction) along the longitudinal direction of the specimens. The mechanical properties of the test specimens, such as flexural strength and flexural modulus (measured according to JIS K7074), were examined. The results are shown in Table 2 below. The mechanical properties of the test specimens in Example 1 were superior to those of the specimens in Reference Examples 1, 2, 3, and 4.

**Table 2**

| | | Resin | Carbon fiber volume content (%) | Pressurizing and heating | Heating method | Flexural strength (MPa) | Flexural modulus (GPa) |
|---|---|---|---|---|---|---|---|
| Reference Example | 1 | XD10 | 45 | - | Induction heating | 553 | 47 |
| | 2 | XD10 | 0 | Good | Induction heating | 105 | 2 |
| | 3 | XD10 | 0 | - | Induction heating | 117 | 2 |
| | 4 | XD10 | 45 | Good | Mold heating | 952 | 78 |
| Example | 1 | XD10 | 45 | Good | Induction heating | 1037 | 86 |
| | 2 | XD10 | 45 | Good | Infrared heating | 1075 | 88 |
| | 3 | XD10 | 45 | Good | Laser heating | 1004 | 81 |
| | 4 | XD10 | 45 | Good | Microwave heating | 1025 | 84 |
| | 5 | Cyanate resin | 45 | Good | Induction heating | 1262 | 98 |
| | 6 | Benzoxazine | 45 | Good | Induction heating | 1238 | 96 |
| | 7 | Phenol | 45 | Good | Induction heating | 1203 | 93 |
| | 8 | Phenol | 60 | Good | Induction heating | 1462 | 119 |

### Example 2

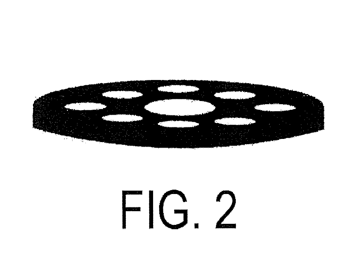

Example 2 was performed in the same manner as in Example 1. A 3D printed article (annular article (see FIG. 2), outer diameter: 30 cm, inner diameter: 25 cm, thickness: 1 mm) was heated to 300°C by an infrared heater (available from Heraeus Holding) before being disposed in a mold. Thereafter, pressurizing (temperature: 300°C, pressure: 10 MPa, time: 10 seconds) was performed using a servo press machine (available from Dai-ichi Dentsu Ltd.).

### Example 3

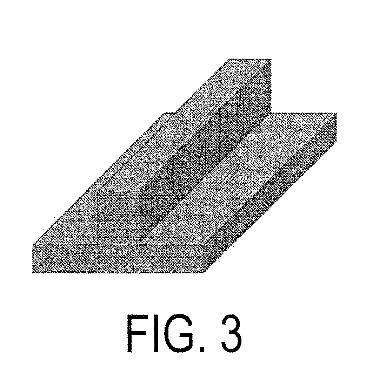

Example 3 was performed in the same manner as in Example 1. A 3D printed article (convex body in cross section (see FIG. 3), width of horizontal bottom plate: 1.5 cm, length in depth direction: 2 cm, thickness: 3 mm, height from the bottom of the bottom plate to the top of the vertical plate: 2 cm) was obtained. Before the product (3D printed article) in FIG. 3 was heated to 300°C by the laser irradiation module (available from Ningbo Xinrui Laser Technology Co., Ltd.) before being disposed in a mold. Thereafter, pressurizing (temperature: 300°C, pressure: 10 MPa, time: 10 seconds) was performed using a servo press machine (available from Dai-ichi Dentsu Ltd.).

### Example 4

Example 4 was performed in the same manner as in Example 1. A 3D printed article (gear-shaped member (see FIG. 4) was obtained. The product (3D printed article) in FIG. 4 was heated to 300°C using a microwave irradiation device (available from Micro Denshi Co., Ltd.) before being disposed in a mold. Thereafter, pressurizing (temperature: 300°C, pressure: 10 MPa, time: 10 seconds) was performed using a servo press machine (available from Dai-ichi Dentsu Ltd.).

### Example 5

In the above examples, thermoplastic resins were used. The same procedure as described above was performed except that a cyanate resin (available from Mitsubishi Gas Chemical Company, Ltd., TA-1500, thermosetting resin in solid form at 25°C) was used in place of the thermoplastic resin. Note that the heating temperature by the above heating method (a high-frequency electromagnetic induction device or the like) was 230°C. In the present example where a thermosetting resin was used, the mold was heated in advance to the curing temperature of the thermosetting resin (180°C). The same tendency was confirmed in the present example where a thermosetting resin was used.

### Example 6

The additive manufacturing technology was performed using a benzoxazine resin (product name: P-d type benzoxazine, available from Shikoku Chemicals Corporation) in place of the thermoplastic resin. At this time, the composite material being wound was unwound while the curl was corrected by heating. The rest of the procedure was performed in the same manner as described above. Note that the heating temperature by the heating method (a high-frequency electromagnetic induction device or the like) was 210°C. In the present example where a thermosetting resin was used, the mold was heated in advance to the curing temperature of the thermosetting resin (175°C). The same tendency was confirmed in the present example where a thermosetting resin was used.

### Example 7

The same procedures were performed in the same manner using a phenol resin (product name: BRM-416T, available from Aica Kogyo Co., Ltd.) in place of the thermoplastic resin. Note that the heating temperature by the heating method (a high-frequency electromagnetic induction device or the like) was 190°C. In the present example where a thermosetting resin was used, the mold was heated in advance to the curing temperature of the thermosetting resin (160°C). The same tendency was confirmed in the present example where a thermosetting resin was used.

### Example 8

The same procedure as in Example 7 was performed, except that a phenolic resin (product name: BRM-416T, available from Aica Kogyo Co., Ltd.) was used in place of the thermoplastic resin and the percentage of carbon fibers was 60 vol%. The same tendency was confirmed in the present example where a thermosetting resin was used.

## Claims

1. A method for producing a fiber-reinforced resin article, comprising:
3D printing including forming an article using fibers and a resin by a 3D printer;
and
pressurizing the 3D printed article formed by the 3D printing, wherein the pressurizing is performed at a temperature at which the resin of the 3D printed article is softened,
**characterized in that** heating to the temperature at which the resin is softened is performed without contact between a heating device that heats the 3D printed article and the 3D printed article, and **in that** the heating is performed before the 3D printed article is disposed in a pressurizing device.

2. The method for producing a fiber-reinforced resin article according to claim 1, wherein the heating before pressurizing is performed by induction heating.

3. The method for producing a fiber-reinforced resin article according to claim 1, wherein the heating before pressurizing is performed by infrared irradiation.

4. The method for producing a fiber-reinforced resin article according to claim 1, wherein the heating before pressurizing is performed by laser irradiation.

5. Themethod for producing a fiber-reinforced resin article according to claim 1, wherein the heating before pressurizing is performed by microwave irradiation.

6. The method according to any one of claims 1 to 5, wherein the temperature at which the resin of the 3D printed article is softened is from (a softening temperature of the resin - 100°C) to (a softening temperature of the resin + 300°C).

7. The method according to any one of claims 1, 2, or 6, wherein the fibers are conductive fibers in a case where the heating is performed by induction heating.

8. The method according to any one of claims 1, 3, or 6,
wherein, in a case where the heating is performed by infrared irradiation, the 3D printed article is a flat plate article with a thickness of 1.5 cm or less, and satisfies 1 ≤ {(thickness of a thickest portion)/(thickness of a thinnest portion)} ≤ 2.

9. The method according to any one of claims 1, 4, or 6,
wherein, in a case where the heating is performed by laser irradiation, the 3D printed article is a three-dimensional article having a part with a maximum thickness of 1.5 cm or more, and satisfies 2 ≤ {(thickness of a thickest portion)/(thickness of a thinnest portion)}.

10. The method according to any of claims 1, 5, 6,
wherein, in a case where the heating is performed by microwave irradiation, the 3D printed article is a three-dimensional article with a protrusion.

11. The method according to any of claims 1 to 10, wherein the resin is a thermoplastic resin.

12. The method according to any one of claims 1 to 10, wherein the resin is a thermosetting resin.

13. The method according to any one of claims 1 to 12, wherein the fibers are carbon fibers.

14. The method according to any one of claims 1 to 13, wherein the fibers comprise fibers with a fiber length of 3 cm or more.

15. The method according to any one of claims 1 to 12, wherein the 3D printed article formed by the 3D printer is disposed in a cavity of a forming die, the 3D printed article is heated to a temperature at which the resin of the 3D printed article is softened in a manner such that the 3D printed article and the forming die are not in contact with a heating device, and the 3D printed article is pressurized in the cavity.

16. The method according to any one of claims 1 to 15, the method comprising preparing a 3D printed article formed using the resin and fibers by a 3D printer, and a forming die having a cavity.

17. The method according to any one of claims 1 to 16, wherein the method produces a fiber-reinforced resin article, and when a test specimen having a length of 100 mm, a width of 15 mm, and a thickness of 2 mm is taken from the fiber-reinforced resin article, the test specimen has a flexural strength of 1000 MPa or more and a flexural modulus of 80 GPa or more.

## Patentansprüche

1. Ein Verfahren zur Herstellung eines faserverstärkten Harzgegenstands, umfassend:
3D-Drucken, einschließlich Bilden eines Gegenstands unter Verwendung von Fasern und eines Harzes mit Hilfe eines 3D-Druckers;
und
Druckbeaufschlagen des 3D-gedruckten Gegenstands, der durch das 3D-Drucken gebildet wurde, wobei das Druckbeaufschlagen bei einer Temperatur durchgeführt wird, bei der das Harz des 3D-gedruckten Gegenstands erweicht wird,
**dadurch gekennzeichnet, dass** das Erwärmen auf die Temperatur, bei der das Harz erweicht wird, ohne Kontakt zwischen einer Heizvorrichtung, die den 3D-gedruckten Gegenstand erhitzt, und dem 3D-gedruckten Gegenstand durchgeführt wird, und dass das Erwärmen durchgeführt wird, bevor der 3D-gedruckte Gegenstand in einer Druckbeaufschlagungsvorrichtung platziert wird.

2. Das Verfahren zur Herstellung eines faserverstärkten Harzgegenstands nach Anspruch 1, wobei das Erwärmen vor der Druckbeaufschlagung durch Induktionserhitzen durchgeführt wird.

3. Das Verfahren zur Herstellung eines faserverstärkten Harzgegenstands nach Anspruch 1, wobei das Erwärmen vor der Druckbeaufschlagung durch Infrarotbestrahlung durchgeführt wird.

4. Das Verfahren zur Herstellung eines faserverstärkten Harzgegenstands nach Anspruch 1, wobei das Erwärmen vor der Druckbeaufschlagung durch Laserbestrahlung durchgeführt wird.

5. Das Verfahren zur Herstellung eines faserverstärkten Harzgegenstands nach Anspruch 1, wobei das Erwärmen vor der Druckbeaufschlagung durch Mikrowellenbestrahlung durchgeführt wird.

6. Das Verfahren nach einem der Ansprüche 1 bis 5, wobei die Temperatur, bei der das Harz des 3D-gedruckten Gegenstands erweicht wird, von (eine Erweichungstemperatur des Harzes - 100°C) bis (eine Erweichungstemperatur des Harzes + 300°C) beträgt.

7. Das Verfahren nach einem der Ansprüche 1, 2 oder 6, wobei die Fasern leitfähige Fasern sind, wenn das Erwärmen durch Induktionserhitzen durchgeführt wird.

8. Das Verfahren nach einem der Ansprüche 1, 3 oder 6,
wobei, wenn das Erwärmen durch Infrarotbestrahlung durchgeführt wird, der 3D-gedruckte Gegenstand ein flacher Plattengegenstand mit einer Dicke von 1,5 cm oder weniger ist und 1 ≤ {(Dicke eines dicksten Bereichs)/(Dicke eines dünnsten Bereichs)} ≤ 2 erfüllt.

9. Das Verfahren nach einem der Ansprüche 1, 4 oder 6,
wobei, wenn das Erwärmen durch Laserbestrahlung durchgeführt wird, der 3D-gedruckte Gegenstand ein dreidimensionaler Gegenstand mit einem Teil mit einer maximalen Dicke von 1,5 cm oder mehr ist und 2 ≤ {(Dicke eines dicksten Bereichs)/(Dicke eines dünnsten Bereichs)} erfüllt.

10. Das Verfahren nach einem der Ansprüche 1, 5, 6.
wobei, wenn das Erwärmen durch Mikrowellenbestrahlung durchgeführt wird, der 3D-gedruckte Gegenstand ein dreidimensionaler Gegenstand mit einem Vorsprung ist.

11. Das Verfahren nach einem der Ansprüche 1 bis 10, wobei das Harz ein thermoplastisches Harz ist.

12. Das Verfahren nach einem der Ansprüche 1 bis 10, wobei das Harz ein duroplastisches Harz ist.

13. Das Verfahren nach einem der Ansprüche 1 bis 12, wobei die Fasern Kohlenstofffasern sind.

14. Das Verfahren nach einem der Ansprüche 1 bis 13, wobei die Fasern Fasern mit einer Faserlänge von 3 cm oder mehr umfassen.

15. Das Verfahren nach einem der Ansprüche 1 bis 12, wobei der 3D-gedruckte Gegenstand, der durch den 3D-Drucker gebildet wurde, in einem Hohlraum eines Umformwerkzeugs platziert wird, der 3D-gedruckte Gegenstand auf eine Temperatur erwärmt wird, bei der das Harz des 3D-gedruckten Gegenstands derart erweicht wird, dass der 3D-gedruckte Gegenstand und das Umformwerkzeug nicht mit einer Heizvorrichtung in Kontakt sind, und der 3D-gedruckte Gegenstand in dem Hohlraum mit Druck beaufschlagt wird.

16. Das Verfahren nach einem der Ansprüche 1 bis 15, wobei das Verfahren Herstellen eines 3D-gedruckten Gegenstands umfasst, der unter Verwendung des Harzes und der Fasern mit Hilfe eines 3D-Druckers und eines Umformwerkzeugs mit einem Hohlraum gebildet wird.

17. Das Verfahren nach einem der Ansprüche 1 bis 16, wobei das Verfahren einen faserverstärkten Harzgegenstand herstellt und wenn ein Prüfstück mit einer Länge von 100 mm, einer Breite von 15 mm und einer Dicke von 2 mm aus dem faserverstärkten Harzgegenstand entnommen wird, das Prüfstück eine Biegefestigkeit von 1000 MPa oder mehr und einen Biegemodul von 80 GPa oder mehr aufweist.

## Revendications

1. Méthode pour produire un article en résine renforcé par des fibres, comprenant :
une impression 3D incluant la formation d'un article par utilisation de fibres et d'une résine par une imprimante 3D ; et
une pressurisation de l'article imprimé en 3D formé par l'impression 3D, laquelle pressurisation est effectuée à une température à laquelle la résine de l'article imprimé en 3D est ramollie,
**caractérisée en ce que** le chauffage à la température à laquelle la résine est ramollie est effectué sans contact entre le dispositif de chauffage qui chauffe l'article imprimé en 3D et l'article imprimé en 3D, et **en ce que** le chauffage est effectué avant que l'article imprimé en 3D soit disposé dans un dispositif de pressurisation.

2. Méthode pour produire un article en résine renforcé par des fibres selon la revendication 1, dans laquelle le chauffage avant la pressurisation est effectué au moyen d'un chauffage par induction.

3. Méthode pour produire un article en résine renforcé par des fibres selon la revendication 1, dans laquelle le chauffage avant la pressurisation est effectué au moyen d'une irradiation d'infrarouges.

4. Méthode pour produire un article en résine renforcé par des fibres selon la revendication 1, dans laquelle le chauffage avant la pressurisation est effectué au moyen d'une irradiation de laser.

5. Méthode pour produire un article en résine renforcé par des fibres selon la revendication 1, dans laquelle le chauffage avant la pressurisation est effectué au moyen d'une irradiation de micro-ondes.

6. Méthode selon l'une quelconque des revendications 1 à 5, dans laquelle la température à laquelle la résine de l'article imprimé en 3D est ramollie va de (la température de ramollissement de la résine - 100 °C) à (la température de ramollissement de la résine + 300 °C).

7. Méthode selon l'une quelconque des revendications 1, 2 et 6, dans laquelle les fibres sont des fibres conductrices dans le cas où le chauffage est effectué au moyen d'un chauffage par induction.

8. Méthode selon l'une quelconque des revendications 1, 3 et 6, dans laquelle, dans le cas où le chauffage est effectué au moyen d'une irradiation d'infrarouges, l'article imprimé en 3D est un article en plaque plate ayant une épaisseur de 1,5 cm ou moins, et satisfait à 1 ≤ {(épaisseur de la portion la plus épaisse) / (épaisseur de la portion la plus mince)} ≤ 2.

9. Méthode selon l'une quelconque des revendications 1, 4 et 6, dans laquelle, dans le cas où le chauffage est effectué au moyen d'une irradiation de laser, l'article imprimé en 3D est un article tridimensionnel ayant une partie dont l'épaisseur maximale est de 1,5 cm ou plus, et satisfait à 2 ≤ {(épaisseur de la portion la plus épaisse) / (épaisseur de la portion la plus mince)}.

10. Méthode selon l'une quelconque des revendications 1, 5, 6, dans laquelle, dans le cas où le chauffage est effectué au moyen d'une irradiation de micro-ondes, l'article imprimé 3D est un article tridimensionnel avec une saillie.

11. Méthode selon l'une quelconque des revendications 1 à 10, dans laquelle la résine est une résine thermoplastique.

12. Méthode selon l'une quelconque des revendications 1 à 10, dans laquelle la résine est une résine thermodurcissable.

13. Méthode selon l'une quelconque des revendications 1 à 12, dans laquelle les fibres sont des fibres de carbone.

14. Méthode selon l'une quelconque des revendications 1 à 13, dans laquelle les fibres comprennent des fibres ayant une longueur de fibre de 3 cm ou plus.

15. Méthode selon l'une quelconque des revendications 1 à 12, dans laquelle l'article imprimé en 3D formé par l'imprimante 3D est disposé dans une cavité d'une matrice de formage, l'article imprimé en 3D est chauffé à une température à laquelle la résine de l'article imprimé en 3D est ramolli d'une manière telle que l'article imprimé en 3D et la matrice de formage ne soient pas en contact avec un dispositif de chauffage, et l'article imprimé en 3D est pressurisé dans la cavité.

16. Méthode selon l'une quelconque des revendications 1 à 15, la méthode comprenant la préparation d'un article imprimé en 3D formé par utilisation de la résine et des fibres au moyen d'une imprimante 3D, et d'une matrice de formage ayant une cavité.

17. Méthode selon l'une quelconque des revendications 1 à 16, laquelle méthode produit un article en résine renforcé par des fibres, et quand une éprouvette ayant une longueur de 100 mm, une largeur de 15 mm et une épaisseur de 2 mm est prise à partir de l'article en résine renforcé par des fibres, l'éprouvette a une résistance à la flexion de 1000 MPa ou plus et un module de flexion de 80 GPa ou plus.
